# EUROPEAN PATENT SPECIFICATION

(11) **EP 1 574 994 B1**
(45) Date of publication and mention of the grant of the patent: **30.05.2012**
(21) Application number: 04354011.1
(22) Date of filing: 11.03.2004
(51) Int. Cl.: G06T 7/20

(54) **Method and system for estimating motion from a sequence of bidimensional arrays of sampled values, optical mouse including such a system and computer program product therefor**
Computerprogramm, Verfahren und Vorrichtung zur Bewegungsschätzung aus einer Sequenz zweidimensionaler Arrays von Abtastwerten, optische Maus, die eine solche Vorrichtung beinhaltet
Logiciel, procédé et processus d'estimation de mouvement à partir d'une série d'arrays bidimensionelles, souris optique comprenant un tel processus

(43) Date of publication of application: 14.09.2005
(73) Proprietor: STMicroelectronics Srl, 20864 Agrate Brianza (IT); STMicroelectronics S.A., 92120 Montrouge (FR)
(72) Inventor: Rovati, Fabrizio Simone, 20092 Cinisello Balsamo (Milano) (IT); Zambotti, Paolo Sergio, 20132 Milano (IT); Mellot, Pascal Jean, 38250 Lans en Vercors (FR)
(74) Representative: Bosotti, Luciano

(56) References cited:
- US-A- 6 014 181
- US-A1- 2003 189 548
- ACAME M ET AL SOCIETY OF PHOTO-OPTICAL INSTRUMENTATION ENGINEERS (SPIE): "Adaptive-size hierarchival block matching for efficient motion compensation of video sequences" ADVANCED IMAGE AND VIDEO COMMUNICATIONS AND STORAGE TECHNOLOGIES. AMSTERDAM, MAR. 20 - 23, 1995, BELLINGHAM, SPIE, US, vol. VOL. 2451, 1995, pages 112-120, XP000732651 ISBN: 0-8194-1802-1
- BUSCHMANN R: "Efficiency of displacement estimation techniques" SIGNAL PROCESSING. IMAGE COMMUNICATION, ELSEVIER SCIENCE PUBLISHERS, AMSTERDAM, NL, vol. 10, no. 1-3, 1 July 1997 (1997-07-01), pages 43-61, XP004082701 ISSN: 0923-5965

## Description

### Field of the invention

The present invention relates to techniques for estimating motion from a sequence of bidimensional arrays of sampled values such as e.g. video frames.

The invention was developed by paying specific attention to the possible application to estimating global motion in a consecutive stream of pictures taken for example by a camera.

A preferred, yet non-limiting field of application of the invention are optical mouse applications where an optical sensor ("finger sensor") generates a signal comprised of a sequence of bidimensional arrays of sampled values indicative of mouse displacement.

In the following description, such a sequence of bidimensional arrays of sampled values will be briefly referred to as a sequence of "video frames" or "images".

### Description of the related art

A high number of arrangements for motion estimation exist in the art based on complex algorithms that perform phase correlation of images and/or edge detection. These prior art arrangements are essentially penalized by a high computational weight.

Recursive motions estimation is frequently used in a digital video encoding techniques, as witnessed e.g. by EP-A-0 917 363 or EP-A-0 944 245.

Specifically, EP-A-1 361 541 proposes a possible application of motion estimation to an optical mouse.

More to the point, EP-A-1 361 541 discloses a method of estimating global motion based on a sequence of subsequent video images (i.e. bidimensional arrays of sampled values), such as those received via an optical mouse for the purposes of detecting its movement. Subsequent video images are represented by digital signals arranged in frames. In order to estimate motion from an array (i.e. frame) with respect to another, the method provides for choosing, from amongst a series of vectors originating from linear combinations of motion vectors resulting from estimates of previous frames and/or constant vectors, a vector considered as the best match for estimating the motion occurring between the two frames. The selection operation in turn includes the operations of:
- performing a virtual overlay of the two frames to be compared mutually offset both horizontally and vertically by amounts identified by the motion vector subject to testing,
- applying a selective grid of pixels to be subject to testing, and
- calculating, for all the pixels selected via the grid, a cost function to determine the effectiveness of the predictor, identifying the vector with the lowest cost function value as the best for the purposes of estimation.

Motion estimation of an object (for instance in an optical mouse) involves estimating the global motion flow intrinsic in a sequence of subsequent images, that is bidimensional arrays of sampled values. Each frame is generally comprised of few pixels (for instance 20x20), but the frame rate is generally rather high (up to 10,000 frames/second) if swift movements are to be detected.

Using a very high frame rate enables detection of very fast movements. However it turns out to be rather penalizing in so far as usual or slow movements are concerned. In fact, due to the very high sampling rate, the relative displacement between subsequent images when the motion is not particularly fast is just a small fraction of the pixels. This requires a very high degree of accuracy (i.e. precision, resolution) in the estimation, for instance 1/8 or 1/16 pixel.

This gives rise to significant problems when the motion becomes fast: estimating a fast movement with the same, maximum resolution requires a substantial amount of processing.

Just by way of example, detecting movement within a window including +/- 3 pixels with 1/16 resolution requires about ((3+1+3) x16) x ((3+1+3) x16) = 12,544 comparisons.

Conversely, a similar estimation with integer (i.e. one pixel) resolution would simply require (3+1+3)x(3+1+3)= 49 comparisons which means that the complexity is 256 times higher in the former case than in the latter previously considered.

Additionally, too high an resolution may produce problems when extensive motion is considered due to sub-pixel interpolation. This is by way of necessity rather rough in the case of low-cost devices such as optical mouses.

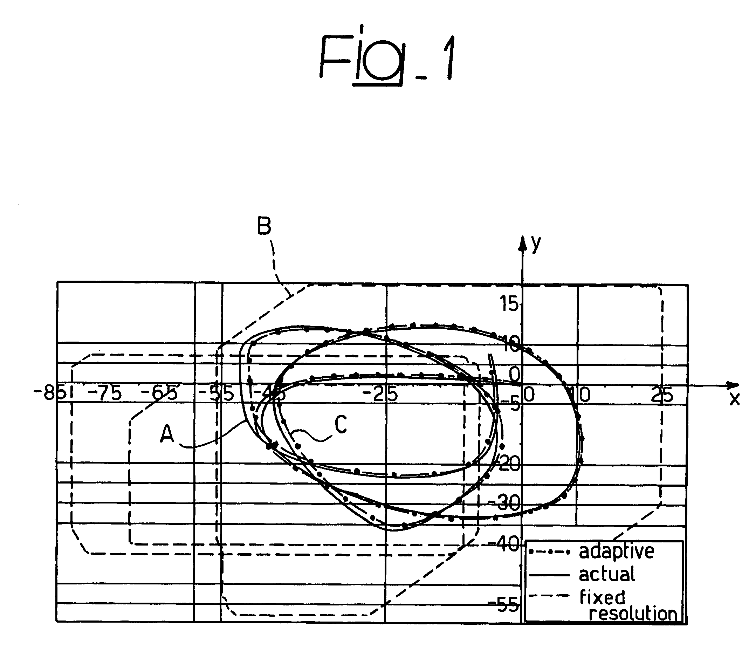

Just to provide an idea of how critical this issue may be, reference may be made to figure 1 of the drawing enclosed.

The figure in questions shows (in continuous line, designated A) the actual movement of e.g. a mouse over an x-y plane. The same figures shows (in dotted chain line, designated B) how such a movement may be detected by means of an arrangement as disclosed in e.g. EP-A-1 361 541 if a fixed (highest) level of resolution is used.

More specifically, the invention relates to a method according to the preamble of Claim 1, which is known, e.g. from US 2003/189 548 A1. US-A-6 014 181 is also of interest for the invention.

### Object and summary of the invention

The object of the present invention is thus to provide an improved arrangement dispensing with the drawbacks of the prior art arrangements considered in the foregoing, with special emphasis placed on possible application in an optical mouse context.

According to the present invention, that object is achieved by means of a method having the features set forth in Claim 1 that follows. The invention also relates to a corresponding system, a mouse arrangement including such a system as well as a computer program product loadable in the memory of at least one computer and including software code portions for performing the method of the invention.

A preferred embodiment of the invention is thus a method for estimating motion in a sequence of bidimensional arrays of sampled values (e.g. video frames), the method including the step of generating estimated motion vectors having at least one component and preferably two components along two reference axes (i.e. x and y axes). Motion estimation is performed with a given resolution and the method described herein includes at least one, and preferably both of:
- dynamically varying the resolution between subsequent estimation steps, and
- selectively varying the resolution of motion estimation independently along the two axes.

A particularly preferred embodiment of the invention is directed to estimating global motion in a consecutive stream of pictures taken from example by a camera. Preferably, this is achieved via a block matching recursive motion estimation technique, with an adaptive estimation arrangement.

The arrangement described herein is particularly adapted for use in new-generation mouses using a video sensor in the place of the ball in order to detect the motion imposed by the user. The arrangement described herein can also be used e.g. in capacitive sensors for acquiring digital fingerprints, new generation telephone terminals, personal digital assistants (PDAs), optical pens for electronic writing. The list reproduced here is obviously non-limiting and this explains i.a. why the annexed claims generally refer to estimating motion from a sequence of bidimensional arrays of sampled values, irrespective of whether these may be termed "images" in a proper sense.

In optical mouse applications, the arrangement described herein derives the motion imposed to the mouse by the user starting from the output frames from a sensor (such as e.g. a video sensor or a camera). As a result of motion, the detector will capture moving images of the surface over which it is moving. Once the relative motion between the two images is detected, a corresponding displacement will be imposed onto the screen pointer controlled by the optical mouse.

Alternatively, one may have to do with an object moving over/under a fixed sensor in order to create moving images. Motion can be reconstructed starting from the relative positions of the subsequent images sampled by the sensor/camera.

In a preferred embodiment of the arrangement described herein that object is achieved via an adaptive estimation algorithm wherein the resolution (e.g. precision, accuracy) of estimation to be changed depending on whether the input video frame is representative of high speed motion or, alternatively, of a relatively slow or very slow, detailed motion.

The arrangement described herein is in a position to automatically adapt the resolution of estimation to the current motion detected, using a higher or lower resolution, i.e. more or less accuracy as necessary.

The arrangement described here can be used as a stand-alone arrangement or in conjunction with adaptive frame rate arrangement as described in a parallel application filed on even date by the same applicants.

### Brief description of the annexed drawings

The invention will now be described, by way of example only, by referring to the enclosed figures of drawing, wherein:
- figure 1, already partly described in the foregoing, is representative of actual motion, also as estimated with a prior art arrangement and an arrangement as described herein,
- figure 2 schematically shows the possible application of the arrangement described herein to an optical mouse context,
- figure 3 is a flow chart representative of operation of the arrangement described herein, and
- figures 4 and 5 are exemplary graphs of results obtained by means of the arrangement described herein.

### Detailed description of a preferred embodiment of the invention

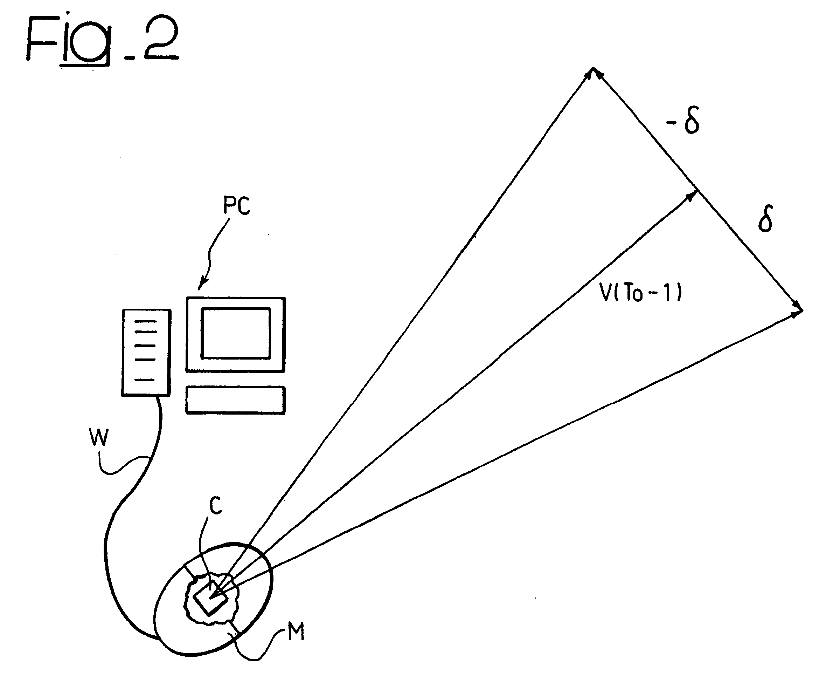

The basic principle of operation of the arrangement shown in figure 2 can be derived from EP-A-1 361 540.

In general terms, with reference to the sketch in Figure 2 and purely by way of example, reference M indicates a mouse associated with a personal computer PC.

Instead of carrying out the function of detecting the motion imparted by the user to the mouse by recognising - as occurs in traditional solutions - the movements imparted to the sphere or ball in the mouse when moving the latter over a contact surface, it is possible to exploit - for the same purposes - the image information supplied by an image sensor - one could naturally think of a web-cam type of (tele)camera - generically indicated as C. This is generally mounted on the mouse M, usually at the underside thereof, where the "ball" or sphere of conventional mouses is arranged.

The mouse M sends the image signal generated by the camera C (capable of adequately defining any image detected within the surrounding environment) to the personal computer PC, upon which the processing functions described in the following are preferable executed. Alternatively, image processing could be performed directly by the mouse, via dedicated circuitry, with only estimated motion information being sent to the PC.

It will be appreciated that the sensor C can be configured in a manner to supply images in digital format directly in output, ready for transmission to the personal computer PC via any type of connection (indicated in the example herein in the form of a cable W) existing between the mouse M and the personal computer PC. The sensor C does not necessarily need to be a camera, and could be some other type of sensor, even based on other physical principles, but suitable for supplying an array of N values/pixels in output, 20x20 for example, which can be used as frames.

In more general terms, the "video frames" referred to herein are thus exemplary of a sequence of bidimensional arrays of sampled values as generated by the sensor C, irrespective of whether these can be properly regarded as constituting "video signals" or "images".

Moreover, as already been stated, the motion detection application for a mouse only constitutes one of the numerous possible applications of the solution according to the invention. For other examples - which it should be remembered are just that - of possible applications of the solution according to the invention, please refer to the introductory part of this description.

Turning again to the example of the mouse M in Figure 1, the movements imparted to the mouse M by the user result in the sensor C sampling and generating a series of digital video images, typically organised in frames, this terminology being obviously derived from television signal processing technology.

The (relative) movement estimate of the said frames generated by the sensor C can be converted (according to known criteria and therefore not requiring a detailed description in this context) into an estimate of the movement of the sensor C and, in consequence, of the mouse M as a whole.

Estimates are typically carried out on the frames sampled by the sensor C starting from the video signal generated by the sensor C. Each frame is estimated with respect to one or more preceding "reference" frames, for example (but not necessarily) with respect to the immediately preceding one.

Each vector is thus expressed in coordinates having a precision in fractions of a pixel, according to the implementation and depending to the desired precision of estimation. Pixels with a non-integer precision can be derived via known standard interpolation techniques, such as a simple two-dimensional linear interpolation for example.

As well known in the art (see, for instance EP-A-1 361 541) a typical procedure applied for each estimate of a frame with respect to a reference frame is a follows.

Starting vectors are constructed, in a known manner and therefore not requiring a detailed description in this context, starting from the last K winning vectors. In practice, the last K winners are stored in a FIFO (First In First Out) memory and the below described linear combinations applied (e.g. for constant acceleration, the difference between the last and penultimate winners is added to the last winner).

The digital video signal is then analysed by considering a series (consisting of a variable number of readers from 0 to N) of vectors originating from linear combinations of vectors produced by previous frame estimates (so-called SEED vectors) and/or constant vectors). The series is subjected to a selection process to determine which vector is the best for estimating the motion that has effectively occurred between the two frames.

For instance, where V(t) is an estimated vector for indicating the motion between the frame t and the frame t-1, some (non exhaustive) examples of what these SEED vectors could be are given below - naturally with reference to the movement estimate for frame T₀:
- constant velocity vector, last: V(T₀-1),
- constant velocity vector, penultimate: V(T₀-2),
- constant velocity vector, last but two: V(T₀-3),
- constant acceleration vector: V (T₀-1) + (V (T₀-1) - V (T₀-2)),
- constant deceleration vector: V (T₀-1) - (V (T₀-1) - V(T₀-2)),
- null vector: (0,0),
- circular acceleration vector, first: V (T₀-1) +δ, where ä is an integer vector orthogonal to V(T₀-1): see Figure 1, and
- circular acceleration vector, second: V(T₀-1)-δ: see Figure 1.

It should be clearly noted that the identification number of the individual SEED vectors could dynamically change over time, following measurements related to operating conditions (estimated motion is null, slow, rapid etc.).

Mentioning the possibility of performing motion estimation on the basis of different types of vectors as indicated in the (exemplary) list above is significant insofar as the invention described herein is per se applicable to any kind of motion estimation process.

Additionally, it will be appreciated that, as used herein, "motion" and "motion estimation" generally indicate the difference(s) and the corresponding estimation processes that may be performed, in a manner known by itself, over a sequence of bidimensional arrays of sampled values irrespective of whether these represent "images" in a proper sense.

More to the point, it will be appreciated that in many of the applications previously referred to (the computer mouse application example being valid for all), estimated null motion can assume a significant role, as it corresponds to all situations in which the mouse M is not being used by the user or is moved so slowly that movement is not detected.

Consequently, reference possibly made in this description and in the claims that follow to at least one of the components of a motion vector estimated being "null" is clearly to be understood as related -to the result of estimation.

Stated otherwise, in the case of very slow motion, at least one of the component of the motion vector estimated (however selected) may in fact be "null", when the corresponding component of physical motion is in fact non-null, but simply so small that it cannot be detected in view of the degree of resolution of detection. Consequently, a non-null component of a very slow motion may well result in a null component in the estimated motion vector.

The basic principle of operation of the arrangement described herein is essentially as disclosed in EP-A-1 361 541. As a consequence, the specific information already provided in that earlier application will not be reproduced here.

The adaptive resolution arrangement described herein is based on the principle of selecting the degree of resolution adapted for estimation dynamically and in an independent manner in the two directions.

Consequently, by way of example, at a certain instant in time, resolution can be full pixel in the horizontal x-direction while being 1/16 pixel in the vertical y-direction, or vice-versa.

Subsequently, it can be switched to 1/8 in the horizontal x-direction and 1/4 in the vertical y-direction.

This key concept permits to dispense with the so-called "grid snapping" effect, whereby e.g. a mouse appears as moving on rails as shown in the diagram B of figure 1.

The arrangement described herein is thus in a position to estimate based on the current motion the optimum resolution for each axis. A basic concept is that the degree of resolution is varied for each axis dynamically depending on the amount motion detected up to that moment.

Such a decision can be based on different metrics, that any person skilled in the art can easily modify without adversely affecting the basic principles of operation.

For instance, one may decide to increase the resolution over one axis (thereby having the possibility of estimating smaller motions) if a number of Q subsequent estimations have yielded a null result (zero value of the estimated motion vector component) for the axis in question or if at least K null results were obtained for that component during the last N motion vector estimation steps (with N larger or equal than K).

Conversely, one may decide to reduce the degree of resolution if the average of the last N (with N larger or equal than K) estimations has yielded results higher than N times the minimum size of the motion component that can be detected. Such a threshold metrics can be extensively varied by a person skilled in the art without in any way departing from the basic principle described herein.

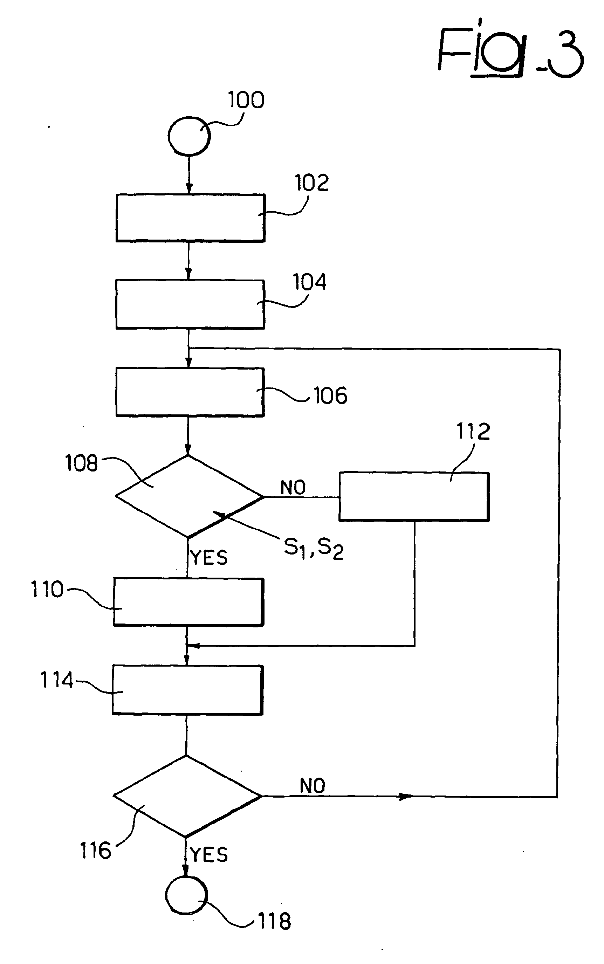

More specifically, an exemplary implementation of the process generally outlined in the foregoing is shown in the flow chart of figure 3.

After a start step 100, during an initialisation phase 102 a value of resolution (default interpolation) can be set for instance at the average value between the maximum and the minimum interpolation (for instance 1/4 pixel). Alternatively, one can select the finest interpolation value, by assuming that the sensor (e.g. the camera C on the mouse M) is a standstill.

Motion estimation is started in a step 104 using that resolution, until a number of values equal to K (for instance 8 or 16) is reached. Thereafter, in a step 106, the adaptation metrics can be estimated independently for each axis (x and y).

For instance, for each axis the average of a certain number of estimated values of the homologous component of the motion vector can be taken for that purpose. The number in question can be possibly selected differently for the x axis and the y axis.

In a step 108 the average values in question are compared with two threshold S₁ and S₂.

If, for example the average value for a given axis has a value lower than or equal to the respective threshold S₁, then in a step 110 the resolution is increased (for instance, from 1/4 pixel to 1/8 pixel) for the axis in question.

If, conversely, the average value is higher than or equal to the threshold S₂, then in a step 112 the resolution will be reduced (for instance from 1/4 pixel to 1/2 pixel).

It will of course be appreciated that, even though represented by single blocks for the sake of simplicity of illustration, the processing steps considered herein, and especially steps 108, 110, and 112 do in fact involve separate processing operations for the two components x and y.

The block 114 indicates a motion estimation step carried out (on both axes x and y) by using the resolution estimated independently for each axis in steps 110 and 112 based on the last motion vectors estimated.

Unless terminated (positive outcome of a step 116, leading to a stop step 118), the estimation process is continued by dynamically adapting the interpolation resolution at each step along the lines of the process detailed in the foregoing.

In an arrangement as described in EP-A-1 361 541 adapting the interpolation resolution can be implemented as follows.

The arrangement is dimensioned for operating with the maximum resolution available (for instance 1/64 pixel).

This means that the measurement unit for the motion vector is 1/64 pixel, whereby motion over a pixel will therefore be represented by the value 64.

A linear interpolator having a resolution 1/64 is implemented. In order to operate at, e.g. 1/4 pixel resolution (which is sixteen times less precise than the 1/64 resolution considered in the foregoing), in the second portion of the arrangement shown in EP-A-1 361 541 "update" values are used in the predictors values +/- 16 (which therefore correspond to 16/64=1/4 pixel) in the place of +/- 1 (which correspond, in the case of the example to 1/64 pixel).

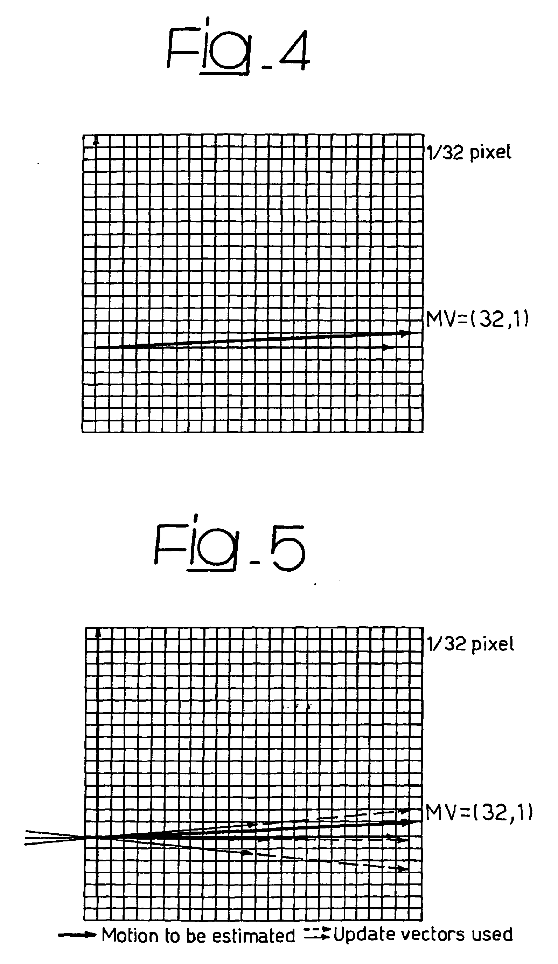

This dispenses with the problem of having an accurate estimation when the motion vectors in two directions are inhomogeneous as shown in figure 4 and 5.

Specifically, both figures 4 and 5 refer to a 1/32 pixel grid.

Figure 4 shows an example of motion having highly unbalanced x and y components e.g. a motion vector MV=(32,1) in 1/32 pixel units).

Conversely, figure 5 shows the possibility of adapting to an unbalanced motion, where the motion is equal to 1/32 along the y axis and one pixel the x axis. In that case, an update with a value 1/32 is used along the y axis and an update with a value 1/2 is used along the x axis.

Essentially, figures 4 and 5 show the possibility for the arrangement described herein to estimate a motion that is fast along the x axis and slow along the y axis.

In actual fact, rather than to the motion vector MV (which is indicated essentially by way of brevity), reference should more properly be made in figure 4 to "the real motion to be estimated"

Figure 5 shows that by using updates of different lengths (e.g.+/-16 or +/- 32 along the x axis and +/- 1 along the y axis as previously indicated) it is possible to approximate the movement in both directions with a high degree of accuracy. For instance, in the case shown, +/- 1 is used along the y axis independently of +/- 32 being used along the x axis.

This is an essential advantage of independent adaptability along the two axes. In the absence of such an independency one could only choose e.g. +/- 1 or +/-32 in both directions, both hypotheses being quite remote from the real situation considered. In the absence of adaptability, only one value, fixed once for all (e.g. +/-1 or +/- 32) could be used.

The arrangement just described solves those problems related to motion having different speeds along the two axes. This can be clearly seen in figure 1, where the chain line diagram, representative of operation of the adaptive resolution arrangement described herein, is shown to very closely "track" the actual mouse movement as shown in full line.

The possibility also exists of coupling the arrangement described herein with an arrangement whereby the frame rate is made adaptive (possibly by "freezing" the update process of the reference frames) as described in EP-A-1 574 993 filed on even date by the same applicants. That arrangement includes the steps of performing motion estimation between a current frame and a reference frame to derive an estimated motion vector. If at least one of the components of said estimated motion vector is null, at least one of the following steps is performed:
a) maintaining the (old) reference frame as the reference frame for motion estimation with a further frame in said sequence, and
b) reducing the frame rate of the sequence of frames.

Being complementary, these two arrangements can be used disjointly or jointly in order to achieve the maximum degree of estimation quality. This both in the case of motion having different speeds over the two axes, and in the case of slow motion along both axes.

If frame rate adaptation is applied to the arrangement described herein, certain limitations are dispensed with that may arise in terms of slow motion estimation in both directions, when this is lower than the maximum resolution adapted by the arrangement. If both arrangements are used jointly the additional advantage is achieved of being able to use in any case a finer resolution for estimation, thus detecting slow motion in a less rough manner.

The arrangement described herein can be used also in other contexts where motion estimation (possibly with adaptive resolution) is performed. For instance, in the place of an optical sensor, one may use sensors based on different principles (for instance a capacitive sensor for a fingerprint detection).

The arrangement described herein can also be used in the area of digital video processing (for instance for moto-compensated frame rate conversion) and encoding (for instance full-pixel, half-pixel or quarter-pixel motion estimation as is the case of e.g. MPEG-2, MPEG-4 and H.264).

Obviously, the basic principles of the invention remaining the same, the details and embodiment may vary, also significantly, with respect to what has been described by way of example only, without departing from the scope of the invention as defined by the annexed claims.

## Claims

1. A method for estimating motion from a sequence of bidimensional arrays of sampled values, the method including the step of generating (104; 114) estimated motion vectors having at least one component along at least one reference axis (x, y), said motion estimation being performed with a given resolution (110, 112), the method **characterised in that** it includes at least one of:
- dynamically varying (110, 112) said resolution between subsequent estimation steps (114), and
- if said estimated motion vectors have two components along two reference axes (x, y), selectively varying (110, 112) the resolution of motion estimation independently along said two axes (x, y).

2. The method of claim 1, **characterised in that** dynamically varying (110, 112) said resolution between subsequent estimation steps includes selectively adapting said resolution as a function of the motion detected (104; 114).

3. The method of either of claims 1 or 2, **characterised in that** it includes the step of increasing (110) said resolution along said at least one reference axis (x, y) if a given number (Q) of motion estimations along said axis have given a null result.

4. The method of either of claims 1 or 2, **characterised in that** it includes the step of increasing (110) said resolution along said at least one reference axis (x, y) if a given fraction (K) of motion estimations along said axis have given a null result.

5. The method of either of claims 1 or 2, **characterised in that** it includes the step of increasing (110) said resolution along said at least one reference axis (x, y) if the average (116) of a given number of motion estimations along said axis is lower than a given threshold (Sᵢ).

6. The method of either of claims 1 or 2, **characterised in that** it includes the step of decreasing (112) said resolution along said at least one reference axis (x, y) if the average (116) of a given number of motion estimations along said axis is higher than a given threshold (Sᵢ).

7. The method of either of claims 5 or 6, **characterized in that** said given threshold is selected as a multiple of the minimum size of motion detectable along said axis.

8. A system for estimating motion from a sequence of bidimensional arrays of sampled values, the system including a motion estimator (PC) configured for generating (104; 114) estimated motion vectors having at least one component along at least one reference axis (x, y), said motion estimator (PC) being configured for operating with a given resolution (110, 112), **characterised in that** said motion estimator (PC) is configured for performing at least one of the steps of:
- dynamically varying (110, 112) said resolution between subsequent estimation steps (114), and
- if said estimated motion vectors have two components along two reference axes (x, y), selectively varying (110, 112) the resolution of motion estimation independently along said two axes (x, y).

9. The system of claim 8, **characterised in that** said motion estimator (PC) is configured for dynamically varying (110, 112) said resolution between subsequent estimation steps as a function of the motion detected (104; 114).

10. The system of either of claims 8 or 9, **characterised in that** said motion estimator (PC) is configured for increasing (110) said resolution along said at least one reference axis (x, y) if a given number (Q) of motion estimation along said axis have given a null result.

11. The system of either of claims 8 or 9, **characterised in that** said motion estimator (PC) is configured for increasing (110) said resolution along said at least one reference axis (x, y) if a given fraction (K) of motion estimations along said axis have given a null result.

12. The system of either of claims 8 or 9, **characterised in that** said motion estimator (PC) is configured for increasing (110) said resolution along said at least one reference axis (x, y) if the average (116) of a given number of motion estimations along said axis is lower than a given threshold (Sᵢ).

13. The system of either of claim 8 or 9, **characterised in that** said motion estimator (PC) is configured for decreasing (112) said resolution along said at least one reference axis (x, y) if the average (116) of a given number of motion estimations along said axis is higher than a given threshold (Sᵢ).

14. The system of either of claims 12 or 13, **characterized in that** said motion estimator (PC) is configured for selecting said given threshold as a multiple of the minimum size of motion detectable along said axis.

15. The system of any of claims 8 to 14, in combination with an optical sensor (C) configured for generating said array sequence.

16. An optical mouse (M) including a system according to any of claims 8 to 15.

17. A computer program product loadable in the memory of at least one computer and including software code portions for performing the method of any of claims 1 to 7 when the product is run on a computer.

## Patentansprüche

1. Verfahren zum Abschätzen einer Bewegung aus einer Sequenz bidimensionaler Anordnungen abgetasteter Werte heraus, wobei das Verfahren den Schritt des Erzeugens (104; 114) abgeschätzter Bewegungsvektoren beinhaltet, welche mindestens eine Komponente entlang mindestens einer Bezugsachse (x, y) aufweisen, wobei die Bewegungsabschätzung bei einer gegebenen Auflösung (110, 112) ausgeführt wird, wobei das Verfahren **dadurch gekennzeichnet ist, dass** es mindestens einen der folgenden Schritte beinhaltet:
- Dynamisches Variieren (110, 112) der Auflösung zwischen aufeinanderfolgenden Abschätzungsschritten (114), und
- Selektives Variieren (110, 112) der Auflösung der Bewegungsabschätzung unabhängig entlang der beiden Achsen (x, y), wenn die abgeschätzten Bewegungsvektoren zwei Komponenten entlang von zwei Bezugsachsen (x, y) aufweisen.

2. Verfahren nach Anspruch 1, **dadurch gekennzeichnet, dass** das dynamische Variieren (110, 112) der Auflösung zwischen aufeinanderfolgenden Abschätzungsschritten das selektive Adaptieren der Auflösung als einer Funktion der detektierten Bewegung (104; 114) beinhaltet.

3. Verfahren entweder nach Anspruch 1 oder nach Anspruch 2, **dadurch gekennzeichnet, dass** es den Schritt des Erhöhens (110) der Auflösung entlang der mindestens einen Bezugsachse (x, y) beinhaltet, wenn eine gegebene Zahl (Q) von Bewegungsabschätzungen entlang der Achse ein Null-Resultat ergeben haben.

4. Verfahren entweder nach Anspruch 1 oder Anspruch 2, **dadurch gekennzeichnet, dass** es den Schritt des Erhöhens (110) der Auflösung entlang der mindestens einen Bezugsachse (x, y) beinhaltet, wenn ein gegebener Bruchteil (K) an Bewegungsabschätzungen entlang der Achse ein Null-Resultat ergeben hat.

5. Verfahren entweder nach Anspruch 1 oder Anspruch 2, **dadurch gekennzeichnet, dass** es den Schritt des Erhöhens (110) der Auflösung entlang der mindestens einen Bezugsachse (x, y) beinhaltet, wenn der Mittelwert (116) einer gegebenen Anzahl von Bewegungsabschätzungen entlang der Achse kleiner als ein gegebener Schwellenwert (Sᵢ) ist.

6. Verfahren entweder nach Anspruch 1 oder Anspruch 2, **dadurch gekennzeichnet, dass** es den Schritt des Verminderns (112) der Auflösung entlang der mindestens einen Bezugsachse (x, y) beinhaltet, wenn der Mittelwert (116) einer gegebenen Anzahl von Bewegungsabschätzungen entlang der Achse größer als ein gegebener Schwellenwert (Sᵢ) ist.

7. Verfahren entweder nach Anspruch 5 oder nach Anspruch 6, **dadurch gekennzeichnet, dass** der gegebene Schwellenwert als ein Vielfaches der Mindestgröße der entlang der Achse detektierbaren Bewegung ausgewählt wird.

8. System zur Bewegungsabschätzung aus einer Sequenz bidimensionaler Anordnungen abgetasteter Werte heraus, wobei das System einen Bewegungsabschätzer (PC) beinhaltet, der zum Erzeugen (104; 114) von abgeschätzten Bewegungsvektoren mit mindestens einer Komponente entlang mindestens einer Bezugsachse (x, y) konfiguriert ist, wobei der Bewegungsabschätzer (PC) zum Betrieb bei einer gegebenen Auflösung (110, 112) konfiguriert ist, **dadurch gekennzeichnet, dass** der Bewegungsabschätzer (PC) zum Ausführen mindestens eines der folgenden Schritte konfiguriert ist:
- Dynamisches Variieren (110, 112) der Auflösung zwischen aufeinanderfolgenden Abschätzungsschritten (114), und
- wenn die abgeschätzten Bewegungsvektoren zwei Komponenten entlang von zwei Bezugsachsen (x, y) aufweisen, selektives Variieren (110, 112) der Auflösung der Bewegungsabschätzung unabhängig entlang der beiden Achsen (x, y).

9. System nach Anspruch 8, **dadurch gekennzeichnet, dass** der Bewegungsabschätzer (PC) zum dynamischen Variieren (110, 112) der Auflösung zwischen aufeinanderflogenden Abschätzungsschritten als einer Funktion der detektierten Bewegung (104, 114) konfiguriert ist.

10. System nach entweder Anspruch 8 oder Anspruch 9, **dadurch gekennzeichnet, dass** der Bewegungsabschätzer (PC) zum Erhöhen (110) der Auflösung entlang der mindestens einen Bezugsachse (x, y) konfiguriert ist, wenn eine gegebene Zahl (Q) von Bewegungsabschätzungen entlang der Achse ein Null-Resultat ergeben hat.

11. System nach entweder Anspruch 8 oder Anspruch 9, **dadurch gekennzeichnet, dass** der Bewegungsabschätzer (PC) zum Erhöhen (110) der Auflösung entlang der mindestens einen Bezugsachse (x, y) konfiguriert ist, wenn ein gegebener Bruchteil (K) an Bewegungsabschätzungen entlang der Achse ein Null-Resultat ergeben hat.

12. System entweder nach Anspruch 8 oder Anspruch 9, **dadurch gekennzeichnet, dass** der Bewegungsabschätzer (PC) zum Erhöhen (110) der Auflösung entlang der mindestens einen Bezugsachse (x, y) konfiguriert ist, wenn der Mittelwert (116) einer gegebenen Anzahl von Bewegungsabschätzungen entlang der Achse kleiner als ein gegebener Schwellenwert (Sᵢ) ist.

13. System entweder nach Anspruch 8 oder Anspruch 9, **dadurch gekennzeichnet, dass** der Bewegungsabschätzer (PC) zum Vermindern (112) der Auflösung entlang der mindestens einen Bezugsachse (x, y) konfiguriert ist, wenn der Mittelwert (116) einer gegebenen Anzahl von Bewegungsabschätzungen entlang der Achse größer als ein gegebener Schwellenwert (Sᵢ) ist.

14. System entweder nach Anspruch 12 oder Anspruch 13, **dadurch gekennzeichnet, dass** der Bewegungsabschätzer (PC) zum Selektieren des gegebenen Schwellenwertes als eines Vielfachen der Mindestgröße der entlang der Achse detektierbaren Bewegung konfiguriert ist.

15. System nach irgendeinem der Ansprüche 8 bis 14, in Kombination mit einem optischen Sensor (C), der zum Generieren der Anordnungssequenz konfiguriert ist.

16. Eine optische Maus (M) einschließlich eines Systems gemäß irgendeinem der Ansprüche 8 bis 15.

17. Ein in den Speicher von mindestens einem Computer ladbares und Computercodeteile zum Ausführen des Verfahrens nach irgendeinem der Ansprüche 1 bis 7, wenn das Produkt auf einem Computer ausgeführt wird, beinhaltendendes Computerprogrammprodukt.

## Revendications

1. Procédé pour estimer un mouvement à partir d'une séquence de matrices bidimensionnelles de valeurs échantillonnées, le procédé comprenant l'étape consistant à générer (104 ; 114) des vecteurs de mouvement estimé présentant au moins une composante le long d'au moins un axe de référence (x, y), ladite estimation de mouvement étant mise en oeuvre avec une résolution donnée (110, 112), le procédé étant **caractérisé en ce qu'**il comporte au moins l'une des étapes ci-dessous consistant à :
- modifier dynamiquement (110, 112) ladite résolution entre des étapes d'estimation subséquentes (114), et
- si lesdits vecteurs de mouvement estimé présentent deux composantes le long de deux axes de référence (x, y), modifier sélectivement (110, 112) la résolution d'estimation de mouvement indépendamment le long desdits deux axes (x, y).

2. Procédé selon la revendication 1, **caractérisé en ce que** l'étape consistant à modifier dynamiquement (110, 112) ladite résolution entre des étapes d'estimation subséquentes comprend l'étape consistant à adapter sélectivement ladite résolution en fonction du mouvement détecté (104 ; 114).

3. Procédé selon l'une quelconque des revendications 1 ou 2, **caractérisé en ce qu'**il comporte l'étape consistant à augmenter (110) ladite résolution le long dudit au moins un axe de référence (x, y) si un nombre donné (Q) d'estimations de mouvement le long dudit axe a donné un résultat nul.

4. Procédé selon l'une quelconque des revendications 1 ou 2, **caractérisé en ce qu'**il comporte l'étape consistant à augmenter (110) ladite résolution le long dudit au moins un axe de référence (x, y) si une fraction donnée (K) d'estimations de mouvement le long dudit axe a donné un résultat nul.

5. Procédé selon l'une quelconque des revendications 1 ou 2, **caractérisé en ce qu'**il comporte l'étape consistant à augmenter (110) ladite résolution le long dudit au moins un axe de référence (x, y) si la moyenne (116) d'un nombre donné d'estimations de mouvement le long dudit axe est inférieure à un seuil donné (Sᵢ).

6. Procédé selon l'une quelconque des revendications 1 ou 2, **caractérisé en ce qu'**il comporte l'étape consistant à diminuer (112) ladite résolution le long dudit au moins un axe de référence (x, y) si la moyenne (116) d'un nombre donné d'estimations de mouvement le long dudit axe est supérieure à un seuil donné (Sᵢ).

7. Procédé selon l'une quelconque des revendications 5 ou 6, **caractérisé en ce que** ledit seuil donné est sélectionné en tant que multiple de la quantité minimale de mouvement détectable le long dudit axe.

8. Système pour estimer un mouvement à partir d'une séquence de matrices bidimensionnelles de valeurs échantillonnées, le système comprenant un estimateur de mouvement (PC) configuré de manière à générer (104 ; 114) des vecteurs de mouvement estimé présentant au moins une composante le long d'au moins un axe de référence (x, y), ledit estimateur de mouvement (PC) étant configuré de manière à fonctionner avec une résolution donnée (110, 112), **caractérisé en ce que** ledit estimateur de mouvement (PC) est configuré de manière à mettre en oeuvre au moins l'une des étapes ci-dessous consistant à :
- modifier dynamiquement (110, 112) ladite résolution entre des étapes d'estimation subséquentes (114) ; et
- si lesdits vecteurs de mouvement estimé présentent deux composantes le long de deux axes de référence (x, y), modifier sélectivement (110, 112) la résolution d'estimation de mouvement indépendamment le long desdits deux axes (x, y).

9. Système selon la revendication 8, **caractérisé en ce que** ledit estimateur de mouvement (PC) est configuré de manière à modifier dynamiquement (110, 112) ladite résolution entre des étapes d'estimation subséquentes en fonction du mouvement détecté (104 ; 114).

10. Système selon l'une quelconque des revendications 8 ou 9, **caractérisé en ce que** ledit estimateur de mouvement (PC) est configuré de manière à augmenter (110) ladite résolution le long dudit au moins un axe de référence (x, y) si un nombre donné (Q) d'estimations de mouvement le long dudit axe a donné un résultat nul.

11. Système selon l'une quelconque des revendications 8 ou 9, **caractérisé en ce que** ledit estimateur de mouvement (PC) est configuré de manière à augmenter (110) ladite résolution le long dudit au moins un axe de référence (x, y), si une fraction donnée (K) d'estimations de mouvement le long dudit axe a donné un résultat nul.

12. Système selon l'une quelconque des revendications 8 ou 9, **caractérisé en ce que** ledit estimateur de mouvement (PC) est configuré de manière à augmenter (110) ladite résolution le long dudit au moins un axe de référence (x, y) si la moyenne (116) d'un nombre donné d'estimations de mouvement le long dudit axe est inférieure à un seuil donné (Sᵢ).

13. Système selon l'une quelconque des revendications 8 ou 9, **caractérisé en ce que** ledit estimateur de mouvement (PC) est configuré de manière à diminuer (112) ladite résolution le long dudit au moins un axe de référence (x, y) si la moyenne (116) d'un nombre donné d'estimations de mouvement le long dudit axe est supérieure à un seuil donné (Sᵢ).

14. Système selon l'une quelconque des revendications 12 ou 13, **caractérisé en ce que** ledit estimateur de mouvement (PC) est configuré de manière à sélectionner ledit seuil donné en tant que multiple de la quantité minimale de mouvement détectable le long dudit axe.

15. Système selon l'une quelconque des revendications 8 à 14, en combinaison avec un capteur optique (C) configuré de manière à générer ladite séquence de matrices.

16. Souris optique (M) comprenant un système selon l'une quelconque des revendications 8 à 15.

17. Produit-programme informatique pouvant être chargé dans la mémoire d'au moins un ordinateur et comprenant des parties de code logiciel pour mettre en oeuvre le procédé selon l'une quelconque des revendications 1 à 7, lorsque le produit est exécuté sur un ordinateur.
